(19) Europäisches Patentamt / European Patent Office / Office européen des brevets

(11) **EP 2 712 759 A2**

(12) **EUROPEAN PATENT APPLICATION**

(43) Date of publication:
**02.04.2014 Bulletin 2014/14**

(51) Int Cl.:
**B60L 3/04** *(2006.01)*  **B60L 3/00** *(2006.01)*

(21) Application number: **13184090.2**

(22) Date of filing: **12.09.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 KR 20120109550**

(71) Applicant: **LSIS Co., Ltd.**
**Dongan-Gu, Anyang**
**Gyeonggi-Do (KR)**

(72) Inventor: **Jeong, Han Uk**
**431-080 Anyang-si, Gyeonggi-do (KR)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(54) **Voltage discharging device of vehicle and voltage discharging method thereof**

(57) Provided is a voltage discharging device. The voltage discharging device includes a battery, an inverter converting a DC power supplied from the battery into an AC power to output the converted AC power, a motor driven by the AC power outputted through the inverter, a main relay disposed between the battery and the inverter to switch the DC power supplied from the battery into the inverter, and a control unit detecting a key-off signal of the vehicle to discharge a DC link voltage of the inverter when the key-off signal is detected. The control unit discharges the DC link voltage by applying one of first and second forced discharging logics different from each other according to a driving state of the vehicle at a time point at which the key-off signal is detected.

【FIG. 2】

【FIG. 3】

**Description**

<u>CROSS-REFERENCE TO RELATED APPLICATIONS</u>

The present application claims priority under 35 U.S.C. 119 and 35 U.S.C. 365 to Korean Patent Application No. 10-2012-0109550 (filed on September 28, 2012), which is hereby incorporated by reference in its entirety.

<u>BACKGROUND</u>

Embodiments relates to a vehicle, and more particularly, to a vehicle and a voltage discharging method thereof.
An inverter system that is a motor control unit used in eco-friendly vehicles is a main component belonging to an electric motor of a vehicle as an electric/electronic sub assembly (ESA) that converts a high-voltage DC power into an AC or DC power for controlling a motor.
As described above, a permanent magnet type motor may be applied to the eco-friendly vehicles. A motor that is applied as a driving unit in the eco-friendly vehicles is driven by phase current transmitted from an inverter for converting a DC voltage into a three-phase voltage by a pulse width modulation (PWM) signal of a control unit through a first high-voltage power cable.

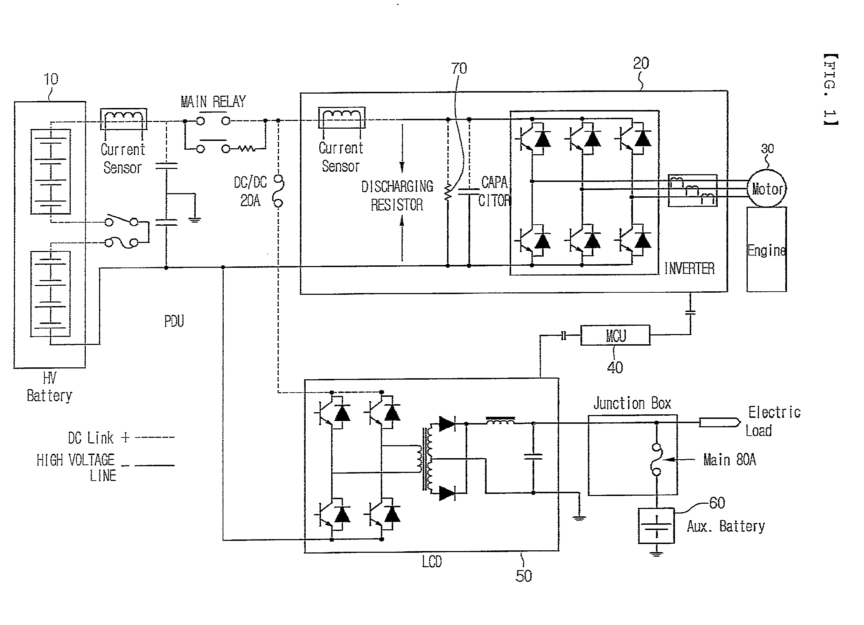

Fig. 1 is a view illustrating a voltage discharging device of a vehicle according to a related art.
Referring to Fig. 1, a voltage discharging device includes a fuel cell 10 for generating electricity, a motor 30 driven by the electric power generated in the fuel cell 10, an inverter 20 converting a DC voltage outputted from the fuel cell 10 into a three-phase AC power to supply the converted three-phase AC power as a power source for driving the motor 30, a motor control unit 40 controlling the inverter 20 according to a PWM signal to phase-change the inverter 20, and a DC/DC converter 50 converting a voltage to supply the power generated from the fuel cell 10 as a power source for various loads of the vehicle.
A high-rank control unit for generally controlling an overall operation of the vehicle may be a hybrid control unit (HCU). The HCU communicates with a motor control unit that is a low-rank control unit through a predetermined method to control a torque, velocity, and power generation torque of the motor that is a driving source. Also, the HCU communicates with an engine control unit (ECU) controlling an engine for generating a voltage power as an auxiliary power source to control an engine starting-related relay and diagnose faults of the engine starting-related relay.
The vehicle discharges a DC link voltage of the inverter, i.e., a voltage charged in a DC link capacitor by using a cement resistor according to an occurrence of key-off that is a part of a safety design for a high voltage.
However, in the above-described DC link voltage discharging system using the cement resistor, the DC link voltage should be forcibly discharged for safety in high-voltage when the key-off occurs. In this process, regular heat may be generated in the resistor itself.
To solve the above-described limitation, technologies for discharging electricity energy charged in the inverter capacitor into a battery through the control of the PWM signal by using the DC/DC converter are proposed.
However, since the above-described DC link voltage discharging system has power consumption of about 10 W, it may take a long time, i.e., about 10 seconds to fully discharge the electricity energy. Thus, the DC link voltage discharging system may have a limitation in stability.
Also, to solve the above-described limitation, technologies in which the main relay is opened to perform a forced discharging logic when the situation such as the key-off occurs, thereby forcibly discharging the DC link voltage are proposed.
However, the above-described DC link voltage discharging system may perform the forced discharging logic regardless of conditions when the vehicle is driven. As a result, a driver may be placed in a dangerous situation.
That is to say, according to the related art, the forced discharging logic may be performed regardless of the driving conditions of the vehicle to cause a software bug such as a case in which the forced discharging logic is performed while the high voltage is applied. As a result, overcurrent may be introduced into the inverter to damage the inverter and the relevant components such as the relay, the battery, and the high-voltage cable, thereby causing malfunction.

<u>SUMMARY</u>

Embodiments provide a voltage discharging device of a vehicle, to which forced discharging logics different from each other are applied according to a driving state of the vehicle to improve stability in the forced discharging operation, and a voltage discharging method thereof.
The feature of the present disclosure is not limited to the aforesaid, but other features not described herein will be clearly understood by those skilled in the art from descriptions below.
In one embodiment, a voltage discharging device of a vehicle includes: a battery; an inverter converting a DC power supplied from the battery into an AC power to output the converted AC power; a motor driven by the AC power outputted through the inverter; a main relay disposed between the battery and the inverter to switch the DC power supplied from the battery into the inverter; and a control unit detecting a key-off signal of the vehicle to discharge a DC link voltage of the inverter when the key-off signal is detected, wherein the control unit discharges the DC link voltage by applying one of first and second forced discharging logics different from each other according to a driving state of the vehicle at a time point at which the key-off signal is detected.

The control unit may determine a time point at which the main relay is opened according to the confirmed driving state of the vehicle, and the first and second forced discharging logics may respectively have different time points at which the main relay is opened.

The time point at which the main relay is opened may include a time point at which a preset time elapses from the time point at which the key-off occurs when the driving state of the vehicle is the first state corresponding to driving of the vehicle, and a time point at which the key-off occurs when the driving state of the vehicle is the first state corresponding to stopping of the vehicle

The control unit may store information including at least one of a driving speed of the vehicle, output current of the inverter, and motor input current to determine the driving state of the vehicle by using the stored information.

When the key-off occurs, the driving state may be determined by using information received at the time point at which the key-off occurs and information finally stored before the time point at which the key-off occurs.

The control unit may set q-axis current supplied into the motor to a zero value and d-axis current to a maximum value to forcibly discharge the DC link voltage.

In another embodiment, a voltage discharging method of a vehicle includes: generating a key-off signal of the vehicle; confirming a driving state of the vehicle at a time point at which the key-off signal is generated when the key-off signal is generated; and applying one of first and second forced discharging logics different from each other according to the confirmed driving state of the vehicle to discharge a DC link voltage.

The voltage discharging method may further include periodically monitoring the driving state of the vehicle by using information including at least one of a driving speed of the vehicle, output current of an inverter, and motor input current.

The first forced discharging logic may be applied when the driving state of the vehicle is a first state corresponding to driving of the vehicle, and the second forced discharging logic may be applied when the driving state of the vehicle is a second state corresponding to stopping of the vehicle.

The first and second forced discharging logics may respectively have different time points at which a main relay is opened.

The discharging of the DC link voltage may include: maintaining a short-circuit state of a main relay for a preset time from the time point at which the key-off occurs when the driving state of the vehicle is the first state; changing the state of the main relay into an opened state when the preset time elapses; and forcibly discharging the DC link voltage.

The discharging of the DC link voltage may include: changing the state of the main relay into an opened state at the time point at which the key-off occurs when the driving state of the vehicle is the second state; and forcibly discharging the DC link voltage.

The forcibly discharging of the DC link voltage may include setting q-axis current applied into a motor to a zero value and d-axis current to a maximum value to forcibly discharge the DC link voltage.

The details of one or more embodiments are set forth in the accompanying drawings and the description below. Other features will be apparent from the description and drawings, and from the claims.

## BRIEF DESCRIPTION OF THE DRAWINGS

Fig. 1 is a view illustrating a voltage discharging device of a vehicle according to a related art.

Fig. 2 is a view illustrating a voltage discharging device of a vehicle according to an embodiment.

Figs. 3 and 4 are views for explaining a forced discharging logic according to an embodiment.

Fig. 5 is a flowchart illustrating a voltage discharging method of a vehicle according to an embodiment.

## DETAILED DESCRIPTION OF THE EMBODIMENTS

The following just illustrates the principle of the invention. Therefore, although not clearly described or not shown, one or ordinary skill in the art would be able to devise various apparatuses which embody the principle of the invention and are according to the concept and scope of the invention. In addition, it should be understood that all conditional terms and embodiments listed in the specification are, in principle, clearly intended only for the purpose of understanding the concept of the invention and are not limited to the specifically-listed embodiments and statuses.

In addition, the principle, viewpoint, and embodiments of the present invention and all detailed descriptions of specific embodiments should be understood to be intended to include the structural and functional equivalents of the matter. In addition, these equivalents should be understood to include currently, well-known equivalents and equivalents to be developed in future, i.e., all elements that are invented to perform the same function regardless of structures.

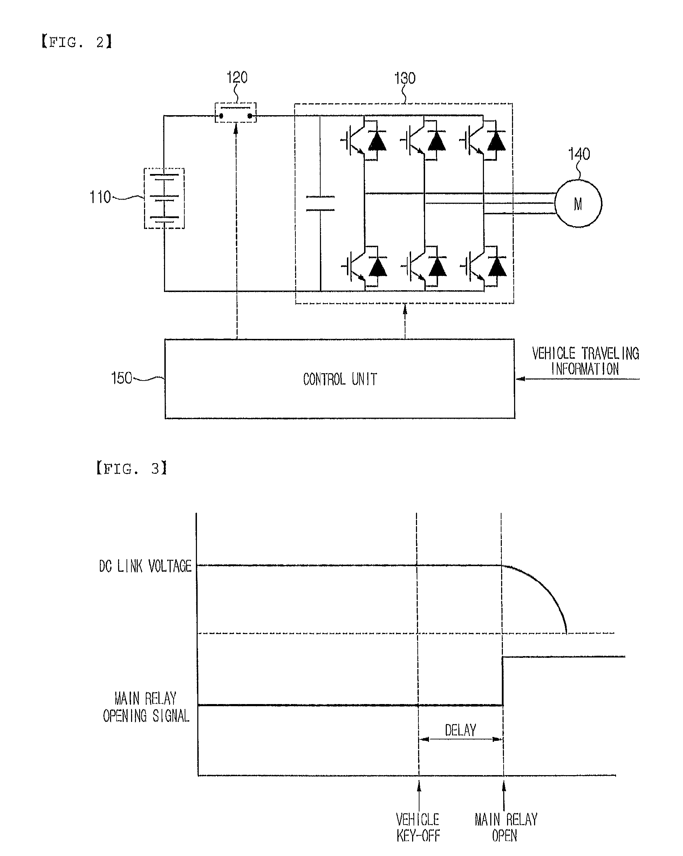

Fig. 2 is a view illustrating a voltage discharging device of a vehicle according to an embodiment.

Referring to Fig. 2, a voltage discharging device of a vehicle includes a battery 110, a main relay 120, an inverter 130, a motor 140, and a control unit 150.

The above-described vehicle may be a complete eco-friendly vehicle which receives a power from the battery 110, and controls the motor 140 by a motor controller that is a representative inverter 130 to achieve optimal efficiency, and replaces an engine with an electric motor to completely prevent noxious gases from being generated.

The battery 110 may include a battery pack constituted by a plurality of battery cells.

It may be necessary to apply a uniform voltage to each of the battery cells included in the battery pack, thereby improving a life cycle and realize a high output.

Thus, the control unit 150 may control the battery cells while charging or discharging the battery cells so that each of the battery cells has an adequate voltage.

However, it may be difficult to maintain an equilibrium state of the plurality of battery cells due to various factors such as a change in an internal impedence. Thus, a separate battery management system (not shown) may have a balancing function for equiponderating changing states of the plurality of battery cells.

For example, a difference in a state of charge (SOC) between the between cells of the battery pack as a time elapses may occur due to a difference in discharge rates of the battery cells of the battery pack. As a result, the vehicle may include separate circuits for booting and/or bucking in each of the battery cells to overcome the unbalance in capacity between the battery cells.

Also, the at least one battery cells may be realized as various kinds of battery cells. For example, the at least one battery cell may include a nickel-cadmium battery, a lead battery, a nickel metal hydride battery, a lithium ion battery, a lithium polymer battery, a metal lithium battery, an air zinc battery, and the like.

The main relay 120 is connected to a predetermined power line connected to the battery 110 to switch a DC power source outputted through the battery 110.

Although only one main relay is disposed on the power line in the drawings, the present disclosure is not limited thereto. For example, the number of main relay may be increased.

For example, the main relay may include a first main relay connected to a positive terminal to switch the DC power source and a second main relay connected to a negative terminal to switch the DC power source.

The inverter 130 receives a DC power from the battery 110 according to the switched state of the main relay 120.

Also, the inverter 130 converts the DC power supplied from the battery 110 into an AC power to supply the converted AC power into the motor 140.

The AC power converted by the inverter 130 may be a three-phase AC power.

Particularly, the inverter 130 may include an insulated gate bipolar transistor (IGBT). The inverter may perform pulse width modulation switching according to a control signal applied from the control unit 150 to phase-change the power supplied from the battery 110, thereby driving the motor 140.

The motor 140 may include a stator (not shown) that is not rotated, but is fixed and a rotor (not shown) that is rotated. The motor 140 receives the AC power supplied through the inverter 130.

For example, the motor 140 may be a three-phase motor. When a voltage-variable/frequency-variable AC power for each phase is applied to a coil of the stator for each phase, a rotation rate of the rotor may vary according to the applied frequency.

The motor 140 may include various motors such as an induction motor, a blushless DC motor (BLDC), a reluctance motor, and the like.

A driving gear (not shown) may be disposed on a side of the motor 140. The driving gear converts rotation energy of the motor 140 according to a gear ratio. The rotation energy outputted from the driving gear may be transmitted into a front wheel and/or a rear wheel to drive the electric vehicle.

Although not shown, the vehicle may further include an electronic controller for controlling overall electronic devices of the vehicle. The electronic controller (not shown) may control the electronic devices so that the electronic devices are operated and displayed. Also, the electronic controller may control the above-described battery management system.

Also, the electronic controller may generate operation command values according to various operation modes (a driving mode, a backward mode, an idle mode, and a packing mode) on the basis of detection signals transmitted from an inclination angle detection unit (not shown) for detecting an inclination angle of the electric vehicle, a velocity detection unit (not shown) for detecting a velocity of the electric vehicle, a brake detection unit (not shown) for detecting an operation of a brake, and an accelerator detection unit (not shown) for detecting an operation of the accelerator pedal. Here, the operation command values may be, for example, a toque command value or a velocity command value.

The vehicle according to an embodiment may include a battery electric vehicle using a battery and motor and a hybrid electric vehicle using an engine, battery, and motor.

Here, the hybrid electric vehicle may further include a switching unit for selecting at least one of the battery and the engine and a transmission. The hybrid electric vehicle may be classified into a series type electric vehicle in which mechanical energy outputted from the engine and a parallel type electric vehicle in which mechanical energy outputted from the engine and electrical energy outputted from the battery are used at the same time.

The control unit 150 controls an operation of the inverter 130.

For example, the control unit 150 may calculate a driving value for driving the motor 140 by using current (three-phase current) supplied into the motor 140 to generate a switching signal (the PWM signal) for controlling the inverter 130 according to the calculated driving value.

Thus, the inverter 130 may selectively perform an ON-OFF operation according to the switching signal generated through the control unit 150 to convert the DC power into the AC power.

The control unit 150 receives traveling information for periodically confirming a traveling state (a driving state) of the vehicle.

Also, the control unit 150 monitors the traveling state (the driving state) of the vehicle by using the stored traveling information.

The control unit 150 may periodically determine whether key-off occurs to stop an operation of the motor 140 according to the occurrence of the key-off.

Here, the key-off may occur while the vehicle is driven. Alternatively, the key-off may occur in a state where the vehicle is stopped.

Thus, the control unit 150 may confirm the traveling state (the driving state) of the vehicle at a time point at which the key-off occurs with respect to the traveling state (the driving state) according to the traveling information of the vehicle. Then, the control unit 150 may apply conditions different from each other according to the confirmed traveling state (the driving state) to perform forced discharging.

Here, the traveling information of the vehicle may include a driving speed of the vehicle and output current (or motor input current) of the inverter.

Thus, the control unit 150 combines the plurality of traveling information with each other through an AND or OR condition to confirm the traveling state (driving state) of the vehicle at the time point at which the key-off occurs according to the combined conditions.

However, it may be difficult to confirm the traveling state (driving state) of the vehicle at the time point at which the key-off occurs. As a result, the control unit 150 may continuously monitor a real-time variation of the traveling information at a time point before the key-off occurs.

Thus, when the key-off occurs, the control unit 150 may confirm the traveling state (driving state) by using the finally stored traveling information. Alternatively, the control unit 150 may acquire the traveling information at the time point at which the key-off occurs to confirm the traveling state (driving state).

Thereafter, when the traveling state (driving state) of the vehicle corresponds to a first condition (traveling) at the time point at which the key-off occurs, the control unit 150 performs the forced discharging by applying the logic as shown in Fig. 3.

That is, if the key-off occurs while the vehicle is traveling, the control unit 150 does not just open the main relay 120, but allows the main relay 120 to be maintained in a short-circuit state for a predetermined time.

Here, the predetermined time may be a time of about three seconds to four seconds.

The key-off during the traveling may occur by following cases.

First, the key-off may occur by inexperienced manipulation of a user.

When the key-off occurs by the inexperienced manipulation, if the forced discharging operation is performed, the driver may be in danger due to a sudden driving stop. As a result, this may be affected as vehicle accident.

Second, the key-off may occur by vehicle crash.

When the key-off occurs by the vehicle crash as described above, if the forced discharging operation is performed just, this may block that the driver moves out of the scene of the vehicle accident. Thus, secondarily vehicle accident may occur.

Therefore, in the current embodiment, the traveling information of the vehicle may be confirmed by using the driving speed of the vehicle and the output current of the inverter (or motor input current) as illustrated in Fig. 3. Then, when the traveling state (driving state) at the time point at which the key-off occurs corresponds to the first condition, the present state may be maintained for a predetermined time.

That is to say, the control unit 150 does not just open the main relay 120 at the time point at which the key-off occurs, but allows the main relay 120 to be maintained in a short-circuit state for a predetermined time.

Also, after the predetermined time elapses, the control unit 150 may change the main relay 120 into the short-circuit state. Then, after the main relay 120 is changed into the short-circuit state, the forced discharging operation may be performed.

The forced discharging operation may be performed by following methods.

Generally, an interior permanent magnet synchronous motor (IPMSM) that is a three-phase AC motor may be applied as a motor applied for vehicles. This is done because the IPMSM has features such as a high output per weight, high mechanical reliability, and high speed possibility.

The three-phase AC motor may perform a vector control in which U, V, and W three-phase current is divided into two phases such as d-axis current that is magnetic flux control current and q-axis current that is torque control current and then controlled. In the control process as described above, a time-varying parameter may be removed, and variables and parameters are expressed as a direct (d) axis and a quadrature-axis (q) which are perpendicular to or separated from each other.

Generally, the d-axis and q-axis are fixed to the stator in a stationary coordinate system. On the other hand, the reference axis is rotated in a rotating coordinate system.

The rotating coordinate system may be fixed to a rotating magnet position or move at a synchronous speed. Also, in a case of sinusoidal source, since the variables in a module of the coordinate system rotated at the synchronous speed are shown as an amount of DC current in a normal state, it may be difficult to easily control the rotating coordinate system.

A voltage equation of the motor in the synchronous coordinate system may be expressed as the following Mathematical Equation 1.

【Mathematical Equation 1】

$$v_d = R_s i_d + L_d \frac{di_d}{dt} - \omega L_q i_q$$

$$v_q = R_s i_q + L_q \frac{di_q}{dt} + \omega L_d i_d + \omega \Psi_F$$

The reference symbols $v_d$, $R_s$, and id represent a d-axis voltage, a motor phasing resistance, and d-axis current, respectively. Also, reference symbols $L_d$ and $\omega$ represent an inductance and a motor angular velocity, respectively.

Also, the reference symbols $v_q$, $i_q$, $L_q$, and $\Psi_F$ represent a q-axis voltage, q-axis current, a q-axis inductance, and a permanent magnet flux, respectively.

The torque equation generated in the above-described motor may be expressed as the following Mathematical Equation 2.

【Mathematical Equation 2】

$$T = \frac{3}{2}\frac{P}{2}\left\{(L_d - L_q)i_d i_q + \Psi_F i_q\right\}$$

The reference symbols T, P, $L_d$, $L_q$, $i_d$, $i_q$, and $\Psi_F$ represent a torque of the motor, the number of poles in the permanent magnet, a d-axis inductance, a q-axis inductance, d-axis current, q-axis current, and a permanent magnet flux, respectively.

Thus, of the q-axis current is zero, a torque is not generated even though significant large current flows. Thus, when the key-off of the vehicle or an air-back operation signal is detected, if the q-axis current is not applied, and only the d-axis current is applied, the current may be lost as heat in the most motors without generating the torque of the motor.

Thus, the q-axis current and the d-axis current are respectively set to zero and a maximum value by the control unit 150 to perform the forced discharging operation.

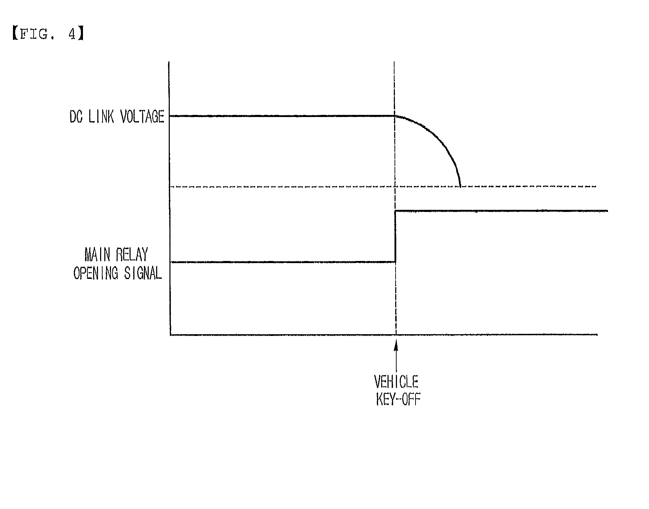

When the traveling state (driving state) of the vehicle corresponds to a second condition corresponding to a stop state at the time point at which the key-off occurs, the control unit 150 performs the forced discharging by applying the logic as shown in Fig. 4.

That is to say, when the key-off occurs, the control unit 150 outputs a signal for opening the main relay 120 just at the time point at which the key-off occurs to prevent the DC power from being supplied from the battery 110 into the inverter 130.

Thereafter, the control unit 150 may perform the forced discharging operation as described above as the main relay 120 is opened to discharge the DC link voltage stored in the DC line capacitor.

As described above, according to the current embodiment, when the key-off occurs, a method with respect to the case in which the vehicle (driving motor) is driven may be realized to prevent the driver from being placed in a dangerous situation due to the power off of the inverter/motor as described above.

Also, the software bug such as the forced discharging while the high voltage is applied may be prevented to prevent overcurrent from being introduced into the inverter (e.g., IGBT). Thus, it may prevent the inverter and the relevant components such as the high-voltage relay, the battery, and the high-voltage cable from being damaged or malfunctioned.

Also, according to the current embodiment, the forced discharging may be performed after the short-circuit state of the main relay is maintained for the predetermined time when the vehicle (the driving motor) is driven. Thus, it may prevent the forced discharging operation from being abnormally performed, and also, it may prevent the human from being damaged by a non-discharged high voltage.

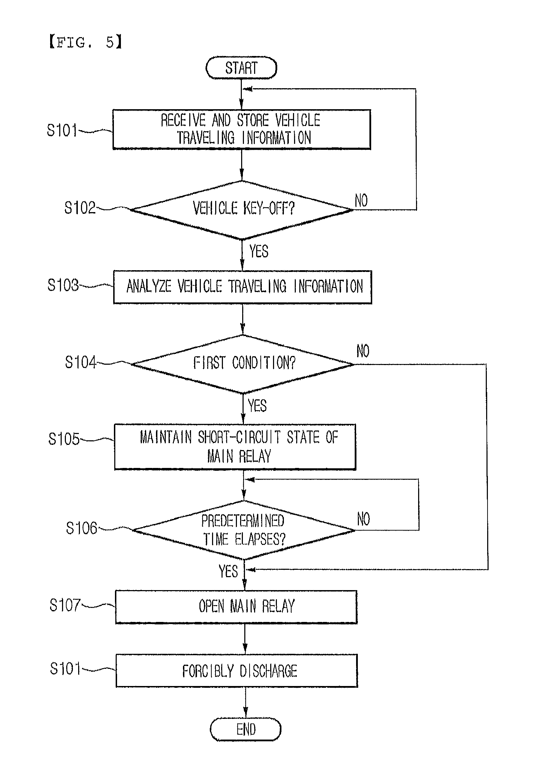

Fig. 5 is a flowchart illustrating a voltage discharging method of a vehicle according to an embodiment.

Referring to Fig. 5, a control unit 150 receives and stores traveling information for confirming a traveling state (a driving state) of a vehicle (S102).

Here, the traveling information may include a driving speed of the vehicle and output current of the inverter (or motor input current). Also, the traveling state may include a first state that represents that the vehicle is traveling at the present and a second state that represents the vehicle is stopped.

Thereafter, the control unit 150 determines whether key-off occurs (S102).

In the determination result (S102), if the key-off occurs, the control unit 140 analyzes traveling information at a time point at which the key-off occurs and traveling information finally stored before a time point at which the key-off occurs (S103).

Thereafter, the control unit 150 determines whether the key-off occurs while the vehicle is traveling or when the vehicle is stopped according to the analyzed results (S104).

In the determination result (S104), if the key-off occurs during the traveling of the vehicle, the control unit 150 may maintain a main relay 120 into a short-circuit state (S105).

Thereafter, in the determination result (S105), it is determined whether a predetermined time elapses from the time point at which the key-off occurs (S106).

In the determination result (S106), if the present time point corresponds to a time point before the predetermined time elapses from the time point at which the key-off occurs, the main relay 120 may be maintained in the short-circuit state. On the other hand, the present time point corresponds to a time point after the predetermined time elapses from the time point at which the key-off occurs, the control unit 150 changes the state of the main relay 120 into an opened sate (S107).

Thereafter, q-axis current and the d-axis current are respectively set to zero and a maximum value by the control unit 150 to forcibly discharge a DC link voltage (S108).

In the determination result (S104), if the key-off occurs during the stop of the vehicle, the process may proceed to an operation S107 to open the main relay 120, thereby performing the forced discharging operation.

According to the current embodiment, when the key-off occurs, a method with respect to the case in which the vehicle (driving motor) is driven may be realized to prevent the driver from being placed in a dangerous situation due to the power off of the inverter/motor as described above.

Also, the software bug such as the forced discharging while the high voltage is applied may be prevented to prevent overcurrent from being introduced into the inverter (e.g., IGBT). Thus, it may prevent the inverter and the relevant components such as the high-voltage relay, the battery, and the high-voltage cable from being damaged or malfunctioned.

Also, according to the current embodiment, the forced discharging may be performed after the short-circuit state of the main relay is maintained for the predetermined time when the vehicle (the driving motor) is driven. Thus, it may prevent the forced discharging operation from being abnormally performed, and also, it may prevent the human from being damaged by a non-discharged high voltage.

It will be understood that some or all of the illustrated blocks may be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks. Also, each of the blocks may represent a portion of a module, segment, or code which includes at least one executable instruction for executing specific logic functions.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

**Claims**

1. A voltage discharging device of a vehicle, the voltage discharging device comprising:

    a battery(110);
    an inverter(130) for converting a DC power supplied from the battery(110) into an AC power to output the converted AC power;
    a motor(140) driven by the AC power outputted through the inverter(130);
    a main relay(120) disposed between the battery(110) and the inverter(130) to switch the DC power supplied from the battery(110) into the inverter(130); and
    a control unit(150) for detecting a key-off signal of the vehicle and discharging a DC link voltage of the inverter when the key-off signal is detected,
    wherein the control unit(150) discharges the DC link voltage by applying one of first and second forced discharging logics different from each other according to a driving state of the vehicle at a time point at which the key-off signal is detected.

2. The voltage discharging device according to claim 1, wherein the control unit(150) determines a time point at which the main relay(120) is opened according to the confirmed driving state of the vehicle, and
    the first and second forced discharging logics respectively have different time points at which the main relay(120) is opened.

3. The voltage discharging device according to claim 2, wherein the time point at which the main relay is opened comprises
    a time point at which a preset time elapses from the time point at which the key-off occurs when the driving state of the vehicle is the first state corresponding to driving of the vehicle, and
    a time point at which the key-off occurs when the driving state of the vehicle is the first state corresponding to stopping of the vehicle.

4. The voltage discharging device according to any one of claim 1 to 3, wherein the control unit(150) stores information comprising at least one of a driving speed of the vehicle, output current of the inverter, and motor input current, and
    the control unit(150) determines the driving state of the vehicle by using the stored information.

5. The voltage discharging device according to claim 4, wherein, when the key-off occurs, the driving state is determined by using information received at the time point at which the key-off occurs and information finally stored before the time point at which the key-off occurs.

6. The voltage discharging device according to any one of claim 1 to 5, wherein the control unit(150) sets q-axis current supplied into the motor to a zero value and d-axis current to a maximum value to forcibly discharge the DC link voltage.

7. A voltage discharging method of a vehicle, the voltage discharging method comprising:

    generating a key-off signal of the vehicle;
    confirming a driving state of the vehicle at a time point at which the key-off signal is generated when the key-off signal is generated; and
    applying one of first and second forced discharging logics different from each other according to the confirmed driving state of the vehicle to discharge a DC link voltage.

8. The voltage discharging method according to claim 7, further comprising periodically monitoring the driving state of the vehicle by using information comprising at least one of a driving speed of the vehicle, output current of an inverter, and motor input current.

9. The voltage discharging method according to claim 7 or 8, wherein the first forced discharging logic is applied when the driving state of the vehicle is a first state corresponding to driving of the vehicle, and the second forced discharging logic is applied when the driving state of the vehicle is a second state corresponding to stopping of the vehicle.

10. The voltage discharging method according to any one of claim 7 to 9, wherein the first and second forced discharging logics respectively have different time points at which a main relay is opened.

11. The voltage discharging method according to claim 9 or 10, wherein the discharging of the DC link voltage comprises:

maintaining a short-circuit state of a main relay for a preset time from the time point at which the key-off occurs when the driving state of the vehicle is the first state;
changing the state of the main relay into an opened state when the preset time elapses; and
forcibly discharging the DC link voltage.

12. The voltage discharging method according to any one of claim 9 to 11, wherein the discharging of the DC link voltage comprises:

changing the state of the main relay into an opened state at the time point at which the key-off occurs when the driving state of the vehicle is the second state; and
forcibly discharging the DC link voltage.

13. The voltage discharging method according to any one of claim 7 to 12, wherein the forcibly discharging of the DC link voltage comprises setting q-axis current applied into a motor to a zero value and d-axis current to a maximum value to forcibly discharge the DC link voltage.

【FIG. 1】

【FIG. 2】

【FIG. 3】

EP 2 712 759 A2

【FIG. 4】

DC LINK VOLTAGE

MAIN RELAY
OPENING SIGNAL

VEHICLE
KEY-OFF

12

【FIG. 5】

```
                          ( START )
                              │
  S101 ──┐        ┌───────────▼───────────┐
         │        │  RECEIVE AND STORE VEHICLE │
                  │    TRAVELING INFORMATION   │
                  └───────────┬───────────┘
                              │
  S102 ──┐             ╱──────▼──────╲        NO
         │       ╱─────                ─────╲ ──┐
                 ╲    VEHICLE KEY-OFF?     ╱   │
                  ╲──────┬──────╱           │
                         │ YES                │
  S103 ──┐        ┌───────▼───────────────┐   │
                  │ ANALYZE VEHICLE TRAVELING │  │
                  │       INFORMATION         │  │
                  └───────┬───────────────┘   │
                          │                     │
  S104 ──┐         ╱──────▼──────╲        NO    │
            ╱─────                ─────╲ ──┐    │
            ╲    FIRST CONDITION?      ╱   │    │
             ╲──────┬──────╱           │    │
                    │ YES                │    │
  S105 ──┐   ┌───────▼───────────────┐   │    │
            │ MAINTAIN SHORT-CIRCUIT STATE OF │ │
            │        MAIN RELAY        │   │    │
            └───────┬───────────────┘   │    │
                    │◄──────────────┐    │    │
  S106 ──┐   ╱──────▼──────╲   NO   │    │    │
       ╱─────  PREDETERMINED  ─────╲─┘    │    │
       ╲      TIME ELAPSES?        ╱       │    │
        ╲──────┬──────╱             │    │
               │ YES ◄──────────────┘    │
  S107 ──┐   ┌───────▼───────┐              │
            │   OPEN MAIN RELAY │              │
            └───────┬───────┘              │
  S101 ──┐   ┌───────▼───────┐              │
            │ FORCIBLY DISCHARGE │              │
            └───────┬───────┘              │
                    │                       │
                ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120109550